Europäisches Patentamt

**European Patent Office**

Office européen des brevets

(19)

(11) **EP 1 229 511 A2**

(12) **EUROPEAN PATENT APPLICATION**

(43) Date of publication:
07.08.2002 Bulletin 2002/32

(51) Int Cl.⁷: **G09G 3/36**

(21) Application number: **02250288.4**

(22) Date of filing: **16.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.01.2001 GB 0102474**

(71) Applicant: **Nokia Corporation**
**02150 Espoo (FI)**

(72) Inventor: **Doe, Steven**
**Camberly, Surrey (GB)**

(74) Representative: **Read, Matthew Charles et al**
**Venner Shipley & Co.**
**20 Little Britain**
**London EC1A 7DH (GB)**

(54) **Liquid crystal display device with improved brightness control**

(57)     A reflective liquid crystal colour display device (5) is driven by image data that has been filtered so that relatively dark regions are displayed lighter than indicated by the image data, so as to compensate for image darkening in the visual representation of the image produced by the display device.

EP 1 229 511 A2

**Description**

This invention relates to a display device which may be used in portable electronic apparatus such as a mobile telephone handset or personal digital assistant (PDA), for example a liquid crystal display device.

Continuously backlit, active matrix and supertwist, colour liquid crystal devices (LCDs) are used extensively in notebook computers, providing high quality images at relatively power consumptions e.g. 2-3 watts. These devices have a low weight and bulk and as a result have substantially superseded monochrome LCD screens. However, for smaller portable electronic apparatus such as palm top computers, personal organisers, other PDAs and mobile telephones, monochrome LCD displays which operate in reflection are used. A backlight may be included but it is generally for use when ambient light level is low rather than on a continuous basis.

The reason for this is that palm top computers, pocket organisers and other PDAs, together with mobile telephones, are too small to accommodate the battery packs required for a continuously backlit LCD of the type used in notebook computers, nor can they accept the additional bulk and weight resulting from the use of a backlight. Simply removing the backlight for a colour LCD and replacing it with a reflector is not a satisfactory solution because the resulting display is very dark and difficult to read. The present invention seeks to provide a solution to this problem.

According to the invention, there is provided display device to display data corresponding to a coloured image with relatively dark and light regions so as to provide a visual representation of the image, without being illuminated by a separately energisable illumination source, configured so that the relatively dark regions are displayed lighter than indicated by the image data whereby to compensate for image darkening in the visual representation of the image produced by the display device.

The device may include processing circuitry to receive the data corresponding to the image and perform filtering of the image data so as to produce filtered image data wherein the relatively dark region is represented by filtered data which corresponds to a region of the display which is lighter than the relatively dark region defined by the image data prior to filtering.

The display device may include an array of individually energisable display elements and a reflector may be provided to reflect ambient light through the display elements. The device may comprise a liquid crystal display device although other devices may be employed such as an electrophoretic or an interference display device.

The invention also includes a method of displaying image data corresponding to a coloured image with relatively dark and light regions utilising a display device that provides a visual representation of the image without being illuminated by a separately energisable illumination source, the method comprising filtering the image data so that the relatively dark regions are displayed lighter than indicated by the image data whereby to compensate for image darkening in the visual representation of the image produced by the display device.

In order that the invention may be more fully understood an embodiment thereof will now be described by way of example with reference to the accompanying drawings in which:

Figure 1 is a schematic diagram of a mobile telephone handset that incorporates a display device according to the invention;

Figure 2 is a block diagram of the major electrical circuit components of the handset shown in Figure 1;

Figure 3 is a schematic cross sectional view of a liquid crystal display device;

Figure 4 is a corresponding plan view of the device shown in Figure 3;

Figure 5 is a schematic block diagram of process steps for filtering image data in accordance with a predetermined transfer function;

Figure 6 is a graph of the transfer function; and

Figure 7 illustrates the effect of filtering in accordance with the invention.

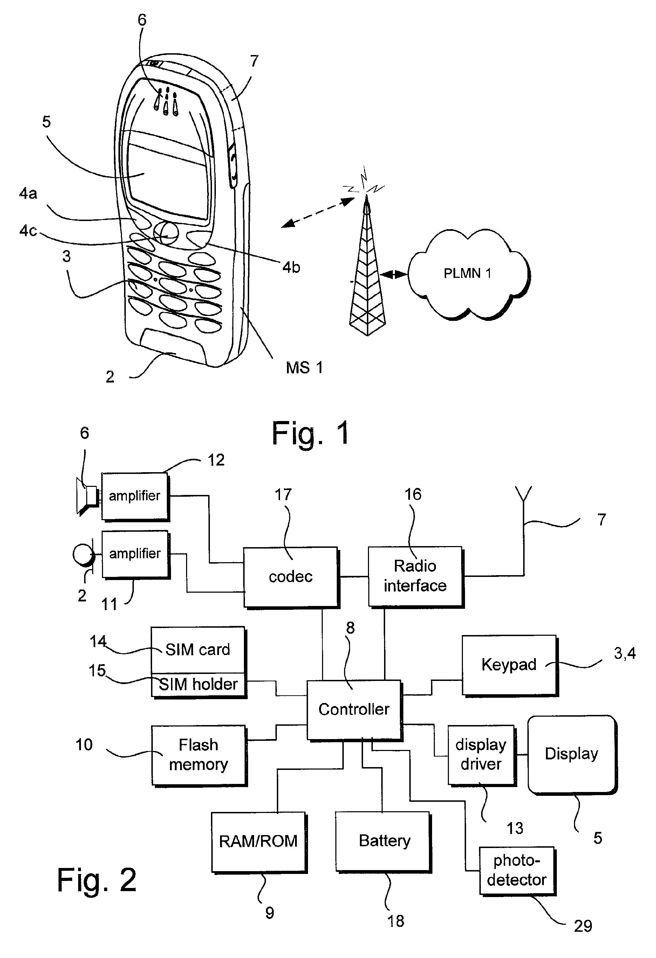

In Figure 1, a mobile station in the form of a battery driven telephone cellular handset MS1 is shown schematically in radio communication with PLMN 1. The mobile handset MS1 includes a microphone 2, keypad 3, soft keys 4, a colour liquid crystal display device 5, earpiece 6 and internal antenna 7. PLMN 1 may be of any of the well known types e.g. GSM or DAMPS and is configured to permit the interchange of data in addition to voice communication.

Circuitry of the handset MS1 is shown in more detail in Figure 2. Signal processing is carried out under the control of a digital micro-controller 8 which has an associated RAM/ROM 9 and flash memory 10. Electrical analog audio signals are produced by a microphone 2 and amplified by preamplifier 11. Similarly, analog audio signals are fed to the earpiece 6 through an amplifier 12. The micro-controller 8 receives instruction signals from the keypad and so-called soft keys 4 and controls operation of the LCD display 5 through a display driver circuit 13.

Information concerning the identity of the user is held on a smart card 14 which may comprise a GSM SIM card which contains the usual GSM international mobile subscriber identity and encryption $K_i$ that is used for encoding radio transmission in the manner well know *per se*. The SIM card 14 is removably received in a SIM card holder 15.

Radio signals are transmitted and received by means of the antenna 7 connected through a rf stage 16 to a codec 17 configured to process signals under the control of the micro-controller 8. Thus, in use, for speech, the codec 17 receives analog signals from the telephone amplifier 11, digitises them into a form suitable for transmission and feeds them to the rf stage 16 for transmission through antenna 7 to PLMN 1 shown in Figure 1. Similarly, signals received from PLMN 1 are fed through the antenna element 7 to be demodulated by the rf stage 16 and fed to codec 17 so as to produce analog signals fed to amplifier 12 and earpiece 6.

Additionally, the handset is configured to receive data through a data transmission channel e.g. a JPEG file corresponding to a colour image to be displayed by the colour LCD 5.

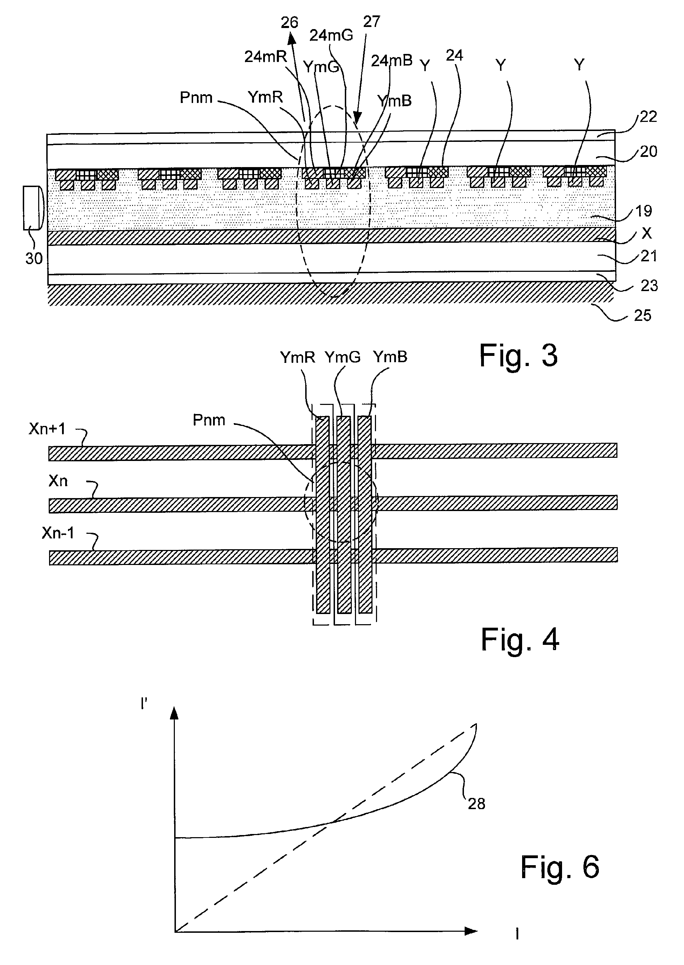

A typical structure of the LCD device 5 will now be considered in more detail with reference to Figures 3 and 4. As shown in Figure 3, the display device 5 comprises a layer of liquid crystal material 19 e.g. twisted nematic liquid crystal sandwiched between upper and lower transparent plates 20, 21 that are typically made of glass. The transparent plates 20, 21 are each provided with a polarising layer 22, 23 with orthogonally disposed planes of polarisation. Spaced, parallel electrode strips X, Y are formed on the support plates 20 and 21 respectively although some of the Y electrodes have been omitted form Figure 4 for purposes of clarity. The electrodes X, Y are typically formed from a transparent vapour deposited metalisation layer by photolithography and selective etching. The electrodes Y on the plate 20 are arranged in groups of 3 for producing primary colours and only one such group is shown in Figure 4. For example, electrode $Y_mR$, $Y_mG$ and $Y_mB$ have associated red green and blue colour filters $24_mR$, $24_mB$ and $24_mG$. The filters are formed of transparent colour filter material deposited in parallel strips on the support plate 20. The transparent plate 21 sits on a reflective layer 25.

Pixels are formed by the intersection of the X and Y electrodes. Pixel $P_{n, m}$ is shown in dotted outline and is formed by the intersection of the red green and blue Y electrodes $Y_mR$, $Y_mG$, $Y_mB$ and the nth X electrode $X_n$. Individual pixels can be energised by energising corresponding X and Y electrodes. The colour produced at the pixel is a function of the relative voltages applied to the red, green and blue electrodes $Y_mR$, $Y_mG$, $Y_mB$. As well known in the art, when energised, unpolarised ambient light enters the pixel in the direction of arrow 26 and becomes plane polarised by the action of polariser 22. The intersection of the three Y electrodes $Y_m$ and the X electrode $X_m$ in effect comprises three sub-pixels red, green and blue light. Considering for example the intersection produced by electrode $Y_mR$ for red light, when appropriately energised, plane polarised light from the polariser 22 passes through the colour filter $24_mR$ and the transparent electrode $Y_mR$. The plane of polarisation of the resulting red light is then twisted according to the configuration of the liquid crystals in layer 19 such that the red light passes through the support plate 21 in alignment with the polarisation direction of polariser 23. The red light is then reflected by reflective layer 25 back through the display device in the direction of arrow 27, in an inverse manner, so as to pass through polariser 22 and provide output red light. A similar process is performed for green and blue light passing through the green and blue filters 24G and 24B. When an energising voltage is applied to electrode $Y_mR$ and electrode $X_n$, the liquid crystal material at the intersection of the electrodes becomes slightly untwisted, depending on the potential difference applied between the electrodes. As a result, the amount of red light produced at the pixel is reduced as a function of the applied voltage. The level of green and blue light can be correspondingly adjusted by applying a voltage to electrodes $Y_mG$ and $Y_mB$. As well known in the art, by appropriately adjusting the voltage levels, both the intensity and the colour of the light produced at the pixel $P_{mn}$ can be altered.

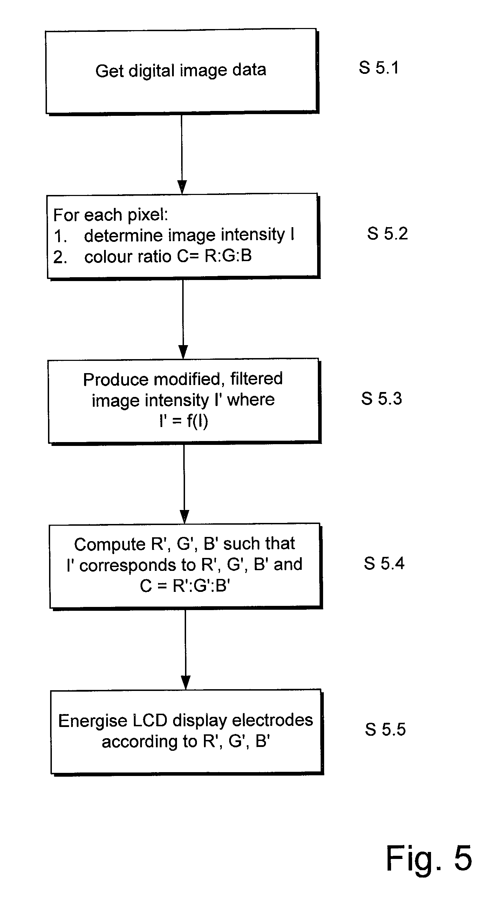

It will be understood that the colour of light produced at the pixel is controlled by selectively absorbing light by controlling the amount of untwisting of the liquid crystal molecules. As a result, the displayed image is relatively dark due to the absorption of light and consequently dark regions of the image appear much darker on the display than specified in the image data. In order to overcome this problem in accordance with the invention, the micro-controller 8 performs digital filtering on the image data so as to improve the image displayed by LCD 5. Referring to Figure 5, at step S5.1 the micro-controller 8 fetches digital image data corresponding to the image to be displayed. The image data may comprise a JPEG file that has been downloaded from PLMN 1 and held in flash memory 10. At step S5.2, the image data is analysed pixel by pixel so as to determine an image intensity *I* specified by the image data for the pixel concerned, together with a parameter *C* which corresponds to the ratio of the colour components red, green and blue i.e. the hue for the pixel concerned.

At step S5.3, the intensity value *I* for the pixel is subject to digital filtering so as to produce a modified intensity value *I'* according to a predetermined filter transfer function *f(I)*, i.e.

$$I' = f(I) \qquad (1)$$

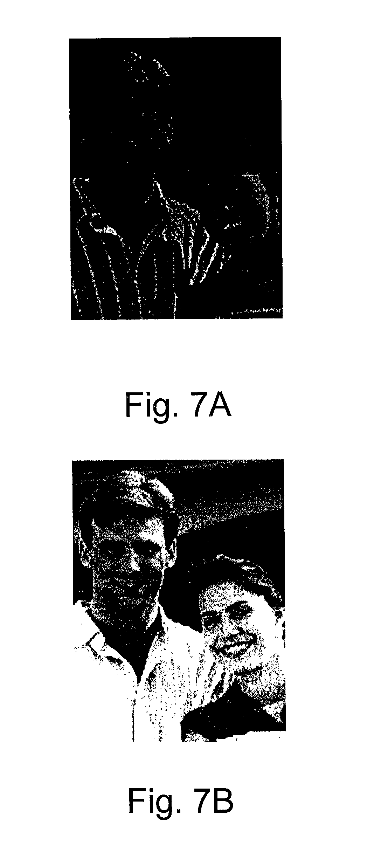

A graph of the transfer function *f(I)* is shown in Figure 6, from which it will be seen that the function is non-linear. The locus 28 of the function is configured so that for image data I corresponding to the low intensity display image, the modified data *I'* corresponds to an increased display intensity, so as to lighten the displayed image. Thus, the transfer function *f(I)* has the effect of compensating for the non-linear intensity response of the liquid crystal display 5.

At step S5.4 the micro-controller computes modified values of the primary red, green and blue data R' G' and B' such that the resultant of the three modified signals produces an intensity corresponding to the modified intensity value $I'$ and such that R' G' and B' corresponds to the colour ratio C computed at step S5.2 i.e. such that

$$C = R': G': B' \qquad (2)$$

At step S5.5, the modified values R' G' and B' are used to energise the three Y electrodes for the pixel concerned. Thus, in the example of Figures 3 and 4, the electrode $x_n$ together with the electrodes $Y_mR$, $Y_mG$ and $Y_mB$ for the pixel $P_{n,m}$ are energised with voltages corresponding to the value of R' G' B'. It will therefore be understood that the intensity produced by the display 5 at pixel $P_{n,m}$ will have an intensity which has been modified from the intensity specified in the image data obtained at step S5.1 so as to lighten the displayed intensity according to the transfer function $f(I)$ thereby compensating for the non-linear display characteristics of the LCD display. The data produced at step S5.5 is supplied to the display driver 13, which converts the digital modified image data produced at step S5.5, into corresponding analog signals to energise the X and Y electrodes of the LCD display 5. It will be understood that the display is processed in a raster scan, pixel by pixel according to a conventional scanning technique.

The process described with reference to Figure 5 is controlled by a program which may be held in flash memory 10 or pre-programmed into ROM 9. Alternatively, the program may be performed by a processor in the display driver 13 instead of in controller 8.

Referring to Figure 7, Figure 7a illustrates a display of JPEG image data on display 5 without using the process according to the invention i.e. without carrying out the digital image data filtering described with reference to Figure 5. Figure 7a illustrates the result of performing the filtering according to the invention and it will be seen that an improved image display is produced in which the darker regions of the image have been lightened so as to improve the appearance and realism of the displayed image.

The transfer function $f(I)$ may be varied according to ambient light conditions. Thus, in low light conditions, it may be appropriate to increase the intensity of darker regions of the image more than in situation where the level of ambient light is greater. This adjustment may be carried out automatically. For example, as shown in Figure 2 a photodetector 29 may provide ambient light image information to the controller 8 such that the transfer function $f(I)$ can be modified according to ambient light conditions. Alternatively, different functions $f(I)$ may be selected by the user, by operation of controls on the keypad 3, 4.

The different functions $f(I)$ may be incorporated into user selectible profiles for use in different situations. For example profiles such as "general", "outdoor", "meeting" and the like can be set up in which features such as ringing tone, volume and other operational parameters can be pre-set and associated with a menu option corresponding to the profile concerned. Thus, individual versions of the function $f(I)$ can be associated with e.g. profiles for outdoor and indoor use.

As with a conventional display, it may be appropriate to provide a selectively energisable illumination source such as lamp 30 mounted in the 'phone as shown in Figure 3, which can be switched on selectively in low light conditions e.g. under the control of the user or automatically when a low light condition is detected by detector . However, in accordance with the invention, the use of the filter with its transfer function $f(I)$ enables the display to be used in ambient light without the need for a continuously energised separate light source such as lamp 30.

Many modifications and variations fall within the scope of the claimed invention. For example, whilst the filtering has been described in relation to JPEG files, it can also be used with other digital data such as bitmapped files and MPEG files. Furthermore, whilst the described example of the invention comprises a mobile telephone handset, the invention can also be implemented in other devices such as palm top computers, pocket organisers and other PDAs.

The described example of an LCD display is a so-called passive matrix and it will be understood that the invention can be applied to other colour LCD devices such as those using an active matrix of thin film transistors. Furthermore, whilst the described example makes use of a twisted nematic liquid crystal material, other materials can be used such as supertwisted nematics (STN) dual scan twisted nematics (DSTN) ferroelectric liquid crystal material and surface stabilised ferroelectric liquid crystal material.

Furthermore the invention is not restricted to LCDs and can be used with other display devices which can be operated without the need for a continuously energised separate illumination source, such as electrophoretic displays and interference modulation displays. The display devices according to the invention can be transmissive rather than reflective as shown in the drawings, such that for example, ambient light is modulated in intensity as a result of transmitting through the device.

**Claims**

1. A display device (5) to display data corresponding to a coloured image with relatively dark and light regions so as to provide a visual representation of the image, without being illuminated by a separately energisable illumination source, **characterised in that** the relatively dark regions are displayed lighter than indicated by the image data whereby to compensate for image darkening in the visual representation of the image produced by the display device.

2. A device according to claim 1 including processing circuitry (8) to receive the data corresponding to the image and configured to perform filtering of the image data so as to produce filtered image data wherein the relatively dark region is represented by filtered data which corresponds to a region which is lighter than the relatively dark region.

3. A device according to claim 2 wherein the processing circuitry is configured to filter the image data according to a predetermined transfer function (*f(I)*).

4. A device according to claim 3 wherein the transfer function is selectively alterable.

5. A device according to claim 4 including a photodetector (29) for detecting ambient light levels, the transfer function being selectively alterable in accordance with the level of ambient light detected by the photodetector.

6. A device according to claim 4 or 5 including user operable means (3,4) to alter the transfer function selectively.

7. A device according to any preceding claim including an array of individually energisable display elements (P$_{n,m}$).

8. A device according to claim 7 including a reflector (25) to reflect ambient light through the display elements.

9. A device according to any preceding claim comprising a liquid crystal or an electrophoretic or an interference display device.

10. A device according to any preceding claim including a selectively energisable light source (30) for illuminating the display in low light conditions.

11. A portable electronic apparatus (MS1) including a display device according to any preceding claim.

12. Apparatus according to claim 11 comprising a mobile telephone handset.

13. Apparatus according to claim 11 or 12 wherein the handset includes a controller (8) operable to receive digital image data transmitted thereto via a radio link and to perform digital filtering of the image data so that the relatively dark regions are displayed lighter than indicated by the image data.

14. Apparatus according to claim 11 or 12 wherein the display device (5) has a display driver including a processor operable to filter the image data so that the relatively dark regions are displayed lighter than indicated by the image data.

15. Apparatus according to claim 11 and comprising a PDA.

16. A computer program for driving a processor configured to provide drive signals for a display device such that it displays data corresponding to a coloured image with relatively dark and light regions and provides a visual representation of the image without being illuminated by a separately energisable illumination source, the program being operable to filter the image data so that the relatively dark regions are displayed lighter than indicated by the image data, whereby to compensate for image darkening in the visual representation of the image produced by the display device.

17. A method of displaying image data corresponding to a coloured image with relatively dark and light regions utilising a display device that provides a visual representation of the image without being illuminated by a separately energisable illumination source, the method comprising filtering the image data so that the relatively dark regions are displayed lighter than indicated by the image data whereby to compensate for image darkening in the visual representation of the image produced by the display device.

# Fig. 1

# Fig. 2

Fig. 3

Fig. 4

Fig. 6

```
┌─────────────────────────────────┐
│                                 │
│      Get digital image data     │        S 5.1
│                                 │
└─────────────────────────────────┘
                 │
                 ▼
┌─────────────────────────────────┐
│ For each pixel:                 │
│ 1.  determine image intensity I │        S 5.2
│ 2.  colour ratio C= R:G:B       │
└─────────────────────────────────┘
                 │
                 ▼
┌─────────────────────────────────┐
│   Produce modified, filtered    │
│    image intensity I' where     │        S 5.3
│           I' = f(I)             │
└─────────────────────────────────┘
                 │
                 ▼
┌─────────────────────────────────┐
│   Compute R', G', B' such that  │
│  I' corresponds to R', G', B' and│       S 5.4
│         C = R':G':B'            │
└─────────────────────────────────┘
                 │
                 ▼
┌─────────────────────────────────┐
│  Energise LCD display electrodes│
│     according to R', G', B'     │        S 5.5
└─────────────────────────────────┘
```

# Fig. 5

Fig. 7A

Fig. 7B